# EUROPÄISCHE PATENTANMELDUNG

(11) **EP 2 098 123 A1**
(43) Veröffentlichungstag der Anmeldung: **09.09.2009**
(21) Anmeldenummer: 08102413.5
(22) Anmeldetag: 07.03.2008
(51) Int. Cl.: A23L 1/05, A23L 1/054

(54) **Verwendung von Alternan als Verdickungsmittel und Verdickungsmittelzusammensetzungen enthaltend Alternan und ein weiteres Verdickungsmittel.**

(71) Anmelder: Bayer CropScience AG, 40789 Monheim (DE)
(72) Erfinder: Pilling, Jens, 44287 Dortmund (DE)
(74) Vertreter: Beyer, Andreas

(57) **Zusammenfassung**

Die Erfindung betrifft die Verwendung von Alternan als Verdickungsmittel, insbesondere für Nahrungsmittel, eine Verdickungsmittelzusammensetzung umfassend Alternan und mindestens ein weiteres Verdickungsmittel, ein Nahrungsmittel umfassend die Verdickungsmittelszusammensetzung, sowie ein Verfahren zur Erhöhung der Viskosität von Nahrungsmitteln.

## Beschreibung

Die vorliegende Erfindung betrifft die Verwendung von Alternan als Verdickungsmittel, insbesondere für Nahrungsmittel, eine Verdickungsmittelzusammensetzung umfassend Alternan und mindestens ein weiteres Verdickungsmittel, ein Nahrungsmittel umfassend die Verdickungsmittelszusammensetzung, sowie ein Verfahren zur Erhöhung der Viskosität von Nahrungsmitteln.

Übliche und seit langem bekannte Verdickungsmittel für Nahrungsmittel sind Stärke, Stärkederivate, modifizierter Stärke, Pektine, Alginsäure, Alginate, Guarmehl, Tragant, Gummiarabikum, Gelatine, Johannisbrotkernmehl, Galactomanan, Xanthan, Carrageen, Karayagummi, Taragummi, Tamarindengummi, Gellan, Mannan, Maltodextrin u.a. Die Literatur dazu ist vielfältig, siehe z.B. Belitz, Grosch, Handbuch der Lebensmittelchemie, 4. Auflage, 1992, Springer Verlag, Berlin-Heidelberg-New York; R. L. Whistler, J. N. BeMiller, Carbohydrate Chemistry for Food Scientists, 1997, Eagan Press, St. Paul, USA; A. Nussinovitch, Hydrocolloid Applications, 1997, Blackie Academic & Professional, London.

In US 4,540,510 sind synergistische Verdickungsmittelzusammensetzungen u.a. für Druckfarben und kosmetische Formulierungen beschrieben. Die US 4,540,510 beschreibt eine Zusammensetzung, umfassend ein Polymer einer Acrylamidomethylpropansulfonsäure mit einem Molekulargewicht über etwa einer Millionen und einem wasserlöslichen Polymer, das ausgewählt ist aus Galactomannangummi, Hydroxyalkylethem von Galactomannangummi, Hydroxyalkylcelluloseethem, Polyalkylenoxidpolymeren und Mischungen davon, wobei die Polymere in der Mischung in einem solchen Verhältnis vorliegen, dass eine synergistische Verdickungswirkung in Flüssigkeiten erzielt wird.

Die Anmeldeschrift US20060141127 beschreibt ein Verdickungssystem für Getränke, besonders für Säfte. Das Verdickungssystem ist aus zwei Komponenten aufgebaut, einem Verdicker und einem Verdickungshilfsmittel, welche eine synergistische Wirkung zeigen. Durch die synergistische Wirkung lässt sich die eingesetzte Menge Verdickungsmittel reduzieren. Der Verdicker ist ausgewählt aus Mehlen, Gummi, modifizierten Speisestärken, und Mischungen davon und das Hilfsmittel aus Zitrusaroma, Zitrusöl, Zitronenschale und Mischungen davon.

Die Aufgabe der vorliegenden Erfindung bestand darin, ein weiteres wirksames Verdickungsmittel oder eine hoch wirksame Verdickungsmittelzusammensetzung zu finden, die insbesondere zur Verwendung in Nahrungsmitteln geeignet ist. Diese Aufgabe wird mit der technischen Lehre laut den beigefügten Patentansprüchen gelöst.

Die vorliegende Erfindung betrifft die Verwendung von Alternan als Verdickungsmittel.

Alternan ist gemäß der vorliegenden Erfindung ein Polysaccharid, das aus Glucoseeinheiten aufgebaut ist. Die Glucoseeinheiten sind miteinander über α-1,3- und α-1,6-glycosidische Bindungen verknüpft und diese zwei Bindungstypen treten vorwiegend alternierend auf. Alternan kann Verzweigungen enthalten (Seymour et al., Carbohydrate Research 74, (1979), 41-62). Alternan sowie Verfahren zur Herstellung von Alternan sind aus dem Stand der Technik bekannt und z.B. beschrieben in Jeanes et al. (1954) J. Am. Chem. Soc., 76: 5041-5052, Misaki et al. (1980) Carbohydr. Res., 84: 273-285, Cote and Robyt (1982), Carbohydr. Res. , 101: 57-74, Cote (1992), Carbohydrate Polymers 19, 249-252, WO 00/47727, US 5,702,942, US20060127328, PCT/EP2008/051760.

Das in der vorliegenden Erfindung verwendete Alternan besitzt vorzugsweise ein Gewichtsmittel des Molekulargewichts Mw im Bereich von etwa 10 000 000 g/mol bis etwa 60 000 000 g/mol (ermittelt mit GPC MALLS), noch mehr bevorzugt etwa 12 000 000 g/mol bis etwa 50 000 000 g/mol.

In einer Ausführungsform ist das verwendete Alternan mit Hilfe von Alternansucrase aus Leuconostoc Mesenteroides hergestellt, wie in der Patentanmeldung WO 00/47727 beschrieben, und besitzt vorzugsweise ein Gewichtsmittel des Molekulargewichts Mw im Bereich von etwa 33 000 000 g/mol bis etwa 60 000 000 g/mol (ermittelt mit GPC MALLS), noch mehr bevorzugt etwa 33 000 000 g/mol bis etwa 50 000 000 g/mol.

In einer weiteren bevorzugten Ausführungsform wird ein Alternan eingesetzt, das ein Gewichtsmittel des Molekulargewichts Mw im Bereich von 12 000 000 bis 30 000 000 g/mol (ermittelt mit GPC MALLS), mehr bevorzugt 14 000 000 bis 28 000 000 g/mol, noch mehr bevorzugt 16 000 000 bis 26 000 000 g/mol, am meisten bevorzugt 19 000 000 bis 23 000 000 g/mol aufweist und mit Hilfe einer verkürzten Alternansucrase hergestellt ist. Die verkürzten Alternansucrasen, das Herstellungsverfahren für solches Alternan sowie das Alternan sind beschrieben in der internationalen Anmeldung PCT/EP2008/051760, auf welche hier ausdrücklich verwiesen wird.

Unter dem Begriff Verdickungsmittel gemäß dieser Erfindung wird ein hochmolekularer, Stoff verstanden, der Flüssigkeiten, vorzugsweise Wasser, aufsaugt, dabei aufquillt und schließlich in zähflüssige echte oder kolloidale Lösung übergeht.

Alternan kann gemäß der Erfindung als Verdickungsmittel verwendet werden, um die Viskosität von Flüssigkeiten zu erhöhen oder die Thixotropie-Eigenschaften von Gelen zu verbessern.

Bevorzugt wird Alternan zur Verdickung von technischen, kosmetischen, pharmazeutischen oder diätetischen Präparaten eingesetzt, z.B. von Lacken, Cremes, Reinigungsmitteln, Appreturen, Farben, Anstrichdispersionen, Klebstoffen, Papier, (dietätischen) Nahrungsmitteln, Nahrungsmittelzwischenprodukten und Nahrungsmittelvorprodukten. Der Begriff Nahrungsmittel umfasst gemäß der vorliegenden Erfindung auch Getränke.

Ganz besonders bevorzugt ist die Verwendung zur Verdickung von (dietätischen) Nahrungsmitteln, da Alternan essbar aber nicht kalorisch ist. Ganz besonders bevorzugte Nahrungsmittel sind ausgewählt aus Soßen, Fleischsaft, Suppen, Dressings, Dips, Milchprodukten, wie Joghurt, Trinkjoghurt, Sahne, Vollfettmilch, Magermilch, Buttermilch, Sauermilch, Kefir, Molke, Mousse, Gelee, Pudding, Brotaufstrich, Marmelade, Speiseeis, Backprodukten und Teigen.

Die Beimischung von Alternan zu einem (dietätischen) Nahrungsmittel kann bei der Herstellung des Nahrungsmittels erfolgen oder direkt vor dem Verzehr des Nahrungsmittels. Das Alternan liegt bevorzugt in Form eines Pulvers oder einer Paste, z.B. gemischt mit Wasser, vor.

Alternan wird einem Nahrungsmittel in einer Menge beigemischt, durch welche der gewünschte Verdickungsgrad erzielt wird. Üblich und bevorzugt sind Mengen von 0,1 - 5 Gewichtsprozent bezogen auf das Gesamtgewicht des Nahrungsmittels, noch mehr bevorzugt 0,1 - 4 Gewichtsprozent, am meisten bevorzugt 0,1 - 3 Gewichtsprozent.

In einem weiteren Aspekt betrifft die Erfindung eine Verdickungsmittelzusammensetzung umfassend Alternan und mindestens ein weiteres Verdickungsmittel. Es wurde festgestellt, dass solche Zusammensetzungen eine synergistische Verdickungswirkung haben. Der Begriff "Verdickunsgmittel" hat die Bedeutung, wie schon weiter oben angegeben

In einer bevorzugten Ausführungsform ist das weitere Verdickungsmittel, das mit Alteran die Verdickungsmittelzusammensetzung bildet, ein Polysaccharid. Bevorzugte Verdickungsmittel sind ausgewählt ist aus der Gruppe bestehend aus Stärke, einem Stärkederivat, modifizierter Stärke, Pektinen, modifizierten Pektinen, Alginsäure, Alginaten, Guarmehl, Tragant, Gummiarabikum, Gelatine, Johannisbrotkernmehl, Galactomanan, Xanthan, Carrageen, Karayagummi, Taragummi, Tamarindengummi, Gellan, Mannan, Maltodextrinen, Cellulose, derivatisierter Cellulose, Dextran und Mischungen von zwei oder mehreren dieser Substanzen. Die genannten Substanzen gehören zum Stand der Technik und sind näher beschrieben in Fachliteratur und Lexika, wie z.B. Römpp Lexikon Chemie, 10. Auflage, 1997, Thieme Verlag, Stuttgart; Belitz, Grosch, Handbuch der Lebensmittelchemie, 4. Auflage, 1992, Springer Verlag, Berlin-Heidelberg-New York; R. L. Whistler, J. N. BeMiller, Carbohydrate Chemistry for Food Scientists, 1997, Eagan Press, St. Paul, USA; A. Nussinovitch, Hydrocolloid Applications, 1997, Blackie Academic & Professional, London.

Eine ganz besonders gute synergistische Verdickungswirkung erzielt man mit einer Verdickungsmittelzusammensetzung, umfassend Alternan und Stärke oder Stärkephosphat. Die Stärke kann mittel bekannter Verfahren aus den üblichen Quellen gewonnen sein, wie z.B. aus Kartoffeln, Maranta (Arrowroot), Maniok (Tapioka), Süßkartoffel, Weizen, Mais, Roggen, Reis, Gerste, Hirse, Hafer, Sorghum, Kastanien, Eicheln, Erbsen, Bohnen, Bananen. Als sehr vorteilhaft hat sich kaltquellende Stärke erwiesen. Stärkephosphate und Methoden zu ihrer Herstellung sind aus dem Stand der Technik bekannt.

In der erfindungsgemäßen Verdickungsmittelzusammensetzung liegen das Alternan und das weitere Verdickungsmittel vorzugsweise in einem Gewichtsverhältnis von 10 : 1 bis 1:10 vor, mehr bevorzugt 8:1 bis 1:8, noch mehr bevorzugt 5:1 - 1:5, insbesondere bevorzugt 2,5:1 - 1:2,5 und am meisten bevorzugt 1,5:1 - 1:1,5.

Die Verdickungsmittelzusammensetzung kann in verschiedensten Formen, vorliegen, wie beispielsweise als Granulat oder Pulver, wobei ein Pulver am meisten bevorzugt ist.

In einer weiteren Variante der vorliegenden Erfindung werden die zuvor beschriebenen Komponenten, Alternan und weiteres Verdickungsmittel, in Form eines Kits bereitgestellt. Darunter ist zu verstehen, dass beide Komponenten unvermischt vorliegen aber in einer Verpackungseinheit zusammengefasst sind, beispielsweise in einer Verpackungseinheit mit zwei getrennten Behältnissen, wobei in ein Behältnis das Alternan abgefüllt ist und in das andere Behältnis das weitere Verdickungsmittel. Mit Hilfe des Kits kann je nach Bedarf eine erfindungsgemäße Verdickungsmittelzusammensetzung in Form einer Mischung der Komponenten erzeugt und anschließend weiter verwendet werden. Beide Komponenten des Kits liegen vorzugsweise in Pulverform vor.

In dem Kit kann das weitere Verdickungsmittel das gleiche sein, wie bereits oben bei den Zusammensetzungen genannt, ganz besonders bevorzugt aber Stärke oder Stärkephosphat. Ebenso sind die Gewichtsverhältnisse der Komponenten des Kits vorzugsweise derart gewählt, wie bereits oben bei den Verdickungsmittelzusammensetzungen beschrieben.

In einem weiteren Aspekt betrifft die vorliegende Erfindung die Verwendung der zuvor beschriebenen Verdickungsmittelzusammensetzung oder des zuvor beschriebenen Kits zum Verdicken von Nahrungsmitteln, Nahrungsmittelvorprodukten oder Nahrungsmittelzwischenprodukten.

Besonders bevorzugt ist die Verwendung zur Verdickung von (dietätischen) Nahrungsmitteln. Ganz besonders bevorzugte Nahrungsmittel sind ausgewählt aus Soßen, Fleischsaft, Suppen, Dressings, Dips, Milchprodukten, wie Joghurt, Trinkjoghurt, Sahne, Vollfettmilch, Magermilch, Buttermilch, Sauermilch, Kefir, Molke, Mousse, Gelee, Pudding, Brotaufstrich, Marmelade, Speiseeis, Backprodukten und Teigen.

Die Beimischung der zuvor beschriebenen Verdickungsmittelzusammensetzung oder des zuvor beschriebenen Kits zu (dietätischen) Nahrungsmitteln kann bei der Herstellung des Nahrungsmittels erfolgen oder direkt vor dem Verzehr des Nahrungsmittels.

Die Zusammensetzung wird einem Nahrungsmittel in einer Menge zugemischt, durch welche der gewünschte Verdickungsgrad erzielt wird. Üblich und bevorzugt sind Mengen von 0,1 - 5 Gewichtsprozent bezogen auf das Gesamtgewicht des Nahrungsmittels, noch mehr bevorzugt 0,1 - 4 Gewichtsprozent und am meisten bevorzugt 0,1- 3 Gewichtsprozent.

In noch einem weiteren Aspekt betrifft die vorliegende Erfindung ein Nahrungsmittel, Nahrungsmittelvorprodukt oder Nahrungsmittelzwischenprodukt, das eine wie oben beschriebene Verdickungsmittelzusammensetzung enthält. Die enthaltene Menge Verdickungsmittelzusammensetzung ist vorzugsweise wie oben angegeben. Die Beimischung der Verdickungsmittelzusammensetzung zu einem Nahrungsmittel kann bei der Herstellung des Nahrungsmittels erfolgen oder direkt vor dem Verzehr des Nahrungsmittels.

Bevorzugte erfindungsgemäße Nahrungsmittel sind ausgewählt aus Soßen, Fleischsaft, Suppen, Dressings, Dips, Milchprodukten, wie Joghurt, Trinkjoghurt, Sahne, Vollfettmilch, Magermilch, Buttermilch, Sauermilch, Kefir, Molke, Mousse, Gelee, Pudding, Brotaufstrich, Marmelade, Speiseeis, Backprodukten und Teigen.

Schließlich betrifft die Erfindung auch ein Verfahren zur Erhöhung der Viskosität von Nahrungsmitteln, Nahrungsmittelvorprodukten oder Nahrungsmittelzwischenprodukten, bei dem man dem Nahrungsmittel, Nahrungsmittelvorprodukt oder Nahrungsmittelzwischenprodukt eine oben beschriebene Verdickungsmittelzusammensetzung beimischt

Eine besonders gute Verdickungswirkung kann erzielt werden, wenn man das Nahrungsmittel, Nahrungsmittelvorprodukt oder Nahrungsmittelzwischenprodukt nach Zugabe der erfindungsgemäßen Verdickungsmittelzusammensetzung einer Wärmebehandlung unterzieht. Unter Wärmebehandlung ist das Erhitzen des Nahrungsmittels, Nahrungsmittelvorprodukts oder Nahrungsmittelzwischenprodukts auf 80 -100 °C zu verstehen, wobei das Erhitzen während des Herstellungsprozesses oder auch im Anschluss an den Herstellungsprozess erfolgen kann. Die Zeitdauer des Erhitzens ist variabel und hängt vom speziellen Nahrungsmittel ab. Üblicherweise erfolgt das Erhitzen aber für mindestens 10 Sekunden.

Die vorliegende Erfindung wird nachfolgend durch Beispiele beschreiben, die aber in keiner Weise als Beschränkung der erfinderischen Idee aufzufassen sind.

### Beispiele

### 1. Herstellung von Alternan

### Methode 1

Das Plasmid pAI-B-AlSu Q29 wurde in E. coli DH5α transformiert. pAI-B-AlSu enthält die codierende Sequenz der Vollänge-Alternansucrase aus Leuconostoc mesenteroides Stamm NRRL B-1355 (s.a. WO 00/47727), ohne die N-terminalen 39 Aminosäuren des Signalpeptids, verknüpft mit einem Octapeptid Strep-tag am C-terminalen Ende. Der Strep-tag ist über einen a Dipeptidlinker mit dem Protein verknüpft. Die Expression der Alternansucrase steht unter der Transkriptionskontrolle des tetA Promoters/Operators und Repressors. Der tetA Promoter wird durch den tet-Repressor stark reguliert, der auf dem selben Plasmid codiert ist und konstitutiv vom β-Lactamase Promoter exprimiert wird. Auf diesem Wege wird die Expression der Alternansucrase stringent unterdrückt bis eine effiziente chemische Induktion durch Tetracyclin oder Anhydrotetracyclin, AHT, erfolgt.

Die Zellen wurden in Mineralmedium (Horn et al., 1996) mit 100 µg/ml Ampicillin und 10% LB medium vorkultiviert. Mineralmedium, ohne LB, wurde mit dieser Vorkultur amgeimpft. Die Zellen wurden bei 37°C angezogen und mit Anhydrotetracyclin induziert (AHT) (0.2 mg/L), und weiter bei 25°C angezogen. Die Zellen wurden geerntet, in [10 mM MOPS pH 7,6; 2,5 mM CaC12 und 0,05 % Trition X-100] resuspendiert und mit einem Hochdruckhomogenisator extrahiert. Das Zelllysat wurde 20 Minuten bei 4°C und 20000 U/min zentrifugiert. Der Überstand wurde über einen 0,22 µm Filter filtriert und man erhielt einen Alternansucraseextrakt.

Alternan wurde in einer 60 Liter Biotransformation hergestellt, die 0,13% Essigsäure, 100 mM NaAc pH 5,3, 20% Sucrose, 1 mM DTT und 1600 ml filtrierten Alternansucraseextrakt (ca. 3900 Units) enthielt. Das Reaktionsgemisch wurde 60 Stunden bei 37°C inkubiert. Das erhaltene Alternan wurde mit 60 Liter technischem Ethanol 40 h bei 4°C gefällt, zweimal mit 60 1 technischem Ethanol und einmal mit 60 Liter 60% absolutem Ethanol gewaschen. Das Produkt wurde durch Lyophilisierung getrocknet. Das Gewichtsmittel des Molekulargewicht des Alternans lag bei ca. 37 000 000 g/mol.

### Methode 2 (für Beispiel 3)

Das Plasmid pAI-B-AlSu Q29 (Beschreibung s. o.) wurde in E. coli DH5α transformiert. Die Zellen wurden in Mineralmedium (Horn et al., 1996) mit 100 µg/ml Ampicillin und 10% LB medium vorkultiviert. Mineralmedium, ohne LB, wurde mit dieser Vorkultur amgeimpft. Die Zellen wurden bei 37°C angezogen und bei einer optischen Dichte (OD₆₀₀) von 50 mit Anhydrotetracyclin induziert (AHT) (0.2 mg/L), und für 22 h weiter bis zu einer OD₆₀₀ von 140 bei 25°C angezogen. Die Zellen wurden durch Zentrifugation geerntet, in 100 mM NaAc, pH 5,3 resuspendiert und mit einem Hochdruckhomogenisator (2 Zyklen, 1200 bar) aufgeschlossen. Das Zelllysat wurde mit DNase/RNase (3 mg/l) behandelt. Der resultierende Extrakt wurde zentrifugiert, um die ungelösten Zellbestandteile inklusive der Einschlusskörper zu erhalten. Der Überstand wurde verworfen, das Pellet wird in 8 M Harnstoff, 50 mM NaAc pH 5,3 resuspendiert und für eine Stunde auf Eis inkubiert, dabei geschüttelt. Ungelöste Zellbestandteile wurden über Zentrifugation entfernt. Der Überstand wurde für die Renaturierung 1:18,75 fach in 0,5 M Harnstoff, 2,5 mM CaCl2, 100 mM NaAc pH 5,3 verdünnt. Die renaturierten Einschlusskörper wurden sofort in Flüssig-Stickstoff eingefroren und bei -20 °C gelagert.

Die Aktivität wurde über einen Aktivitätassay bestimmt (Lopez-Mungia et al., 1993). Ein Unit der Alternansucrase entspricht der Umsetzung von 1 µmol Fruktose pro Minute bei 37 °C.

Alternan wurde in einer 30 Liter Biotransformation hergestellt, die 75 mM NaAc pH 5,3, 20% Sucrose und 5000 ml renaturierte Einschlusskörper (ca. 11950 Units) enthielt. Das Reaktionsgemisch wurde 47 Stunden bei 37°C inkubiert. Das erhaltene Alternan wurde mit 30 Liter technischem Ethanol 40 h bei 4°C gefällt, zweimal mit 30 l technischem Ethanol und einmal mit 30 Liter 60% absolutem Ethanol gewaschen. Das Produkt wurde durch Lyophilisierung getrocknet. Das Gewichtsmittel des Molekulargewichts des Alternans lag bei ca. 40 000 000 g/mol.

### Referenz:

Horn U, Strittmatter W, Krebber A, Knupfer U, Kujau M, Wenderoth R, Muller K, Matzku S, Pluckthun A, Riesenberg D. High volumetric yields of functional dimeric miniantibodies in Escherichia coli, using an optimized expression vector and high-cell-density fermentation under non-limited growth conditions. Appl Microbiol Biotechnol 1996; (46): 524-532.

### 2. Verdickung von Soße

Ein einfaches Soßensystem wurde ausgewählt, um die Viskositätsbildungseigenschaften des Alternans zu testen.

### Basisrezept

| | |
|---|---|
| Hühnerbrühe | 89,85% |
| Stärke | 2,83% |
| Sojaöl | 3,63% |
| Mehl | 2,12% |
| Hühnerboullion | 1,21% |
| Xanthan | 0,25% |
| Salz | 0,10% |

Als Verdicker wurden Alternan, hergestellt wie in Beispiel 1, und/oder Stärke (Resista® von der Firma Tata & Lyle) eingesetzt.

Kochen: Definiert als Erhitzen der Rezeptur mit Alternan auf eine Temperatur von 85 - 87°C und Halten bei dieser Temperatur für 10 Minuten. Wenn kein Kochschritt mit Alternan durchgeführt wurde, wurde das Alternan nach dem 10 minütigen Halten in die Soße gerührt.

Viskositätsmessung: Gemessen wurde mit einem Brookfield RV Viskometer. Die Geschwindigkeit wurde konstant auf 20 U/min eingestellt. Die Spindeln wurden in Abhängigkeit von der Verdickung der Probe gewechselt. Die Soße wurde auf Raumtemperatur (21°C) gebracht. Die Viskositäten lagen im Bereich von 20 cp bis 80000 cp (cp = centipoise).

### Verfahren:

a) Verfahren ohne Kochen
   1. Abmessen von Hühnerbrühe
   2. Vorvermischen von Mehl mit Stärke, sofern vorhanden
   3. Zugeben der Trockenmischung in kalte Hühnerbrühe unter heftigem Verquirlen
   4. Bestimmung der Kaltviskosität (Skala von 1 bis 10, wobei 1 eine geringe Viskosität anzeigt und 10 eine sehr hohe)
   5. Zugabe von Hühnerboullion und Salz
   6. Zugabe von Öl
   7. Erhitzen der Mischung auf eine Temperatur von 85 - 88°C
   8. Bestimmung der Heißviskosität (Skala von 1 bis 10, wobei 1 eine geringe Viskosität anzeigt und 10 eine sehr hohe)
   9. Abdecken der Pfanne und Beibehalten der Temperatur für 10 min
   10. Entfernen der Abdeckung und verquirlen der Soße zum langsamen Abkühlen. Die Soße ist immer noch heiß (65 - 71°C)
   11. Schrittweise Zugabe von Alternan bis zur Vermischung
   12. Bestimmung der Viskosität nach Alternanzugabe (Skala von 1 bis 10, wobei 1 eine geringe Viskosität anzeigt und 10 eine sehr hohe)
   13. Platzieren der fertiggestellten Soße in einem Konservenglas unter Verschluss
b) Verfahren mit Kochen
   1. Abmessen von Hühnerbrühe
   2. Vorvermischen von Mehl und Alternan und, sofern vorhanden, Stärke,
   3. Zugeben der Trockenmischung in kalte Hühnerbrühe unter heftigem Verquirlen
   4. Bestimmung der Kaltviskosität (Skala von 1 bis 10, wobei 1 eine geringe Viskosität anzeigt und 10 eine sehr hohe)
   5. Zugabe von Hühnerboullion und Salz
   6. Zugabe von Öl
   7. Erhitzen der Mischung auf eine Temperatur von 85 - 88°C
   8. Bestimmung der Heißviskosität (Skala von 1 bis 10, wobei 1 eine geringe Viskosität anzeigt und 10 eine sehr hohe)
   9. Abdecken der Pfanne und Beibehalten der Temperatur für 10 min
   10. Entfernen der Abdeckung und verquirlen der Soße zum langsamen Abkühlen
   11. Platzieren der fertiggestellten Soße in einem Konservenglas unter Verschluss

### Ergebnisse:

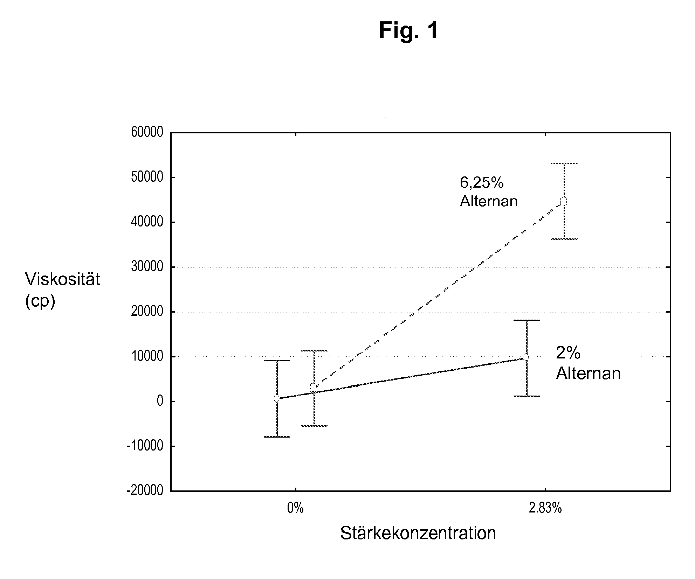

Stärke und Alternan beeinflussen die Viskosität signifikant. Bei hohen Konzentrationen von Stärke und Alternan ist ein synergistischer Effekt beobachtbar. Bei 0% Stärke ist ein Ansteig der Viskosität zu beobachten wenn die Alternankonzentration von 2% auf 6,25% ansteigt (ca. 10000 cp). Bei einer Stärkekonzentration von 2,83% beträgt der Viskositätsanstieg das 4-5fache (ca. 45000 cp) wenn man die Alternankonzentration von 2% auf 6,25% erhöht. Die Figur 1 zeigt diese Ergebnisse.

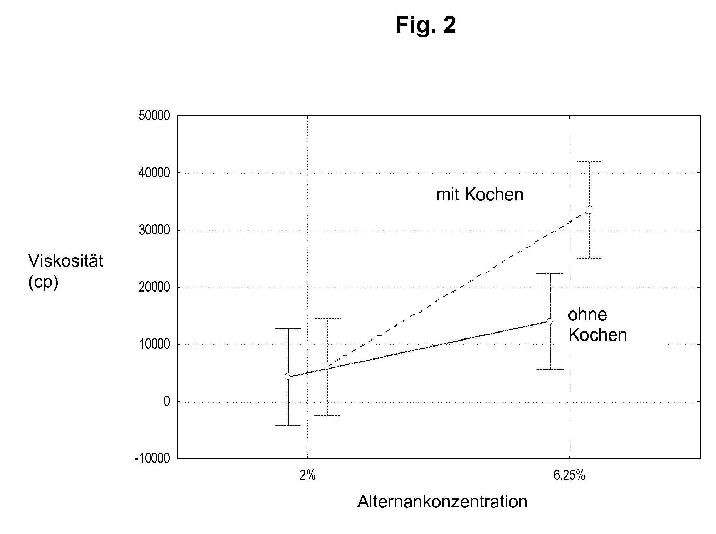

Das Kochen beeinflusst die Viskosität und es besteht eine Wechselwirkung zwischen dem Kochen und der Alternankonzentration. Wenn die Alternankonzentration 2% beträgt erhöht das Kochen die Viskosität nicht signifikant. Aber wenn die Alternankonzentration 6,25% beträgt, beläuft sich die Differenz in der Viskosität zwischen Kochen und Nicht-Kochen auf etwa 20000 cp. Diese Ergebnisse sind in der Figur 2 dargestellt.

### 3. Verdickung von Pudding

In Instantpudding wurden drei verschiedene Konzentrationen von Alternan (0, 2,5 und 5,0 %) und drei verschiedene Stärkekonzentrationen (0, 2,25 and 4,5 %) gestestet und Synergien zwischen Alternan und Stärke evaluiert.

Alternan wurde gemäß Bsp. 1 hergestellt. Bei der Stärke in den Experimenten A-F handelte es sich um es sich um Firm Tex® der Firma National Starch, bei dem Experimenten G, H und I mit 4,5% Konzentration um Ultrasperse 2000® von National Starch.

Die Ergebnisse sind in der nachfolgenden Tabelle dargestellt. Alternan und Stärke wirken verdickend. Es wurde eine synergistische Interaktion zwischen Stärke und Alternan gefunden, die besonders bei einer höheren Stärkekonzentration ersichtlich war.

| | **A** | **B** | **C** | **D** | **E** | **F** | **G** | **H** | **I** |
|---|---|---|---|---|---|---|---|---|---|
| **Stärkekonzentration** | **-** | **-** | **-** | **2,25%** | **2,25%** | **2,25%** | **4,5%** | **4,5%** | **4,5%** |
| **Alternankonzentration** | **-** | **2,5%** | **5,0%** | **-** | **2,5%** | **5,0%** | **-** | **2,5%** | **5,0%** |
| Anfangsbeobachtung | schaumig, mittelmäßig dick, gleichförmig | schaumig, dick, gleichförmig Schaumschicht | schaumig, zwei Schichten | schaumig, gleichförmig | schaumig, gleichförmig | leichter Schaum | mit Luft durchsetzt, gleichförmig | mit Luft durchsetzt, gleichförmig | große Lufteinschlüsse, gleichförmig |
| Anfangsviskosität, cp (Temp. ∼ 11°C) | 40 | 52 | 70 | 420 | 675 | 1.160 | 19.200 | 61.000 | 100.000 |
| Anfangsgelfestigkeit (Kraft, g) | 0,00 | 0,00 | 0,00 | 0,00 | 0,00 | 0,00 | 0,00 | 0,00 | 0,00 |
| 4 Stunden Beobachtung | ähnlich wie zu Anfang, dunkle Schicht am Boden | ähnlich wie zu Anfang, dunkle Schicht am Boden | ähnlich wie zu Anfang, dunkle Schicht am Boden | ähnlich wie zu Anfang | schaumig, marmoriert, gleichförmig | leichter Schaum, marmoriert, gleichförmig | leicht mit Luft durchsetzt, gleichförmig | mit Luft durchsetzt, gleichförmig | große Lufteinschlüsse, gleichförmig |
| 4 Stunden Viskosität, cp (Temp. ∼6,7°C) | 48 | 58 | 80 | 850 | 2.480 | 5.736 | 80.400 | 180.000 | 261.200 |
| 4 Stunden Gelfestigkeit (Kraft, g) | 0,00 | 0,00 | 0,00 | 0,00 | 0,00 | 14,32 | 15,27 | 23,14 | 43,36 |
| 1 Tag Beobachtung | dünn, flüssig, getrennt mit dunkler Schicht am Boden, oben schaumig | dünn, flüssig, getrennt mit dunkler Schicht am Boden, oben schaumig | dünn, flüssig, getrennt mit dunkler Schicht am Boden, oben schaumig | marmoriert, getrennte dünne Schicht am Boden | marmoriert, getrennte dünne Schicht am Boden, oben dunkler | keine Trennung, aber marmoriert mit leichten Flecken, keine Synerese, glänzend, ziemlich glatt, dünne Puddingkonsistenz | gleichförmig, leicht mit Luft durchsetzt, keine Synerese, glänzend, glatt, typische Puddingkonsistenz | leicht mit Luft durchsetzt, keine Synerese, glänzend, ziemlich glatt beim Rühren, annehmbare Puddingkonsistenz aber klebrig | grosse Lufteinschlüsse, gleichförmig, keine Synerese, mittlerer Glanz beim Rühren, sehr dick und klebrig, weiße Flecken sichtbar |
| 1 Tag Viskosität , cp (Temp. 2,2°C) | 48 | 65 | 98 | 2.460 | 3.512 | 5.816 | 92.400 | 206.000 | 360.000 |
| 1 Tag Gelfestigkeit | 0,00 | 0,00 | 0,00 | 0,00 | 0,00 | 16,86 | 17,67 | 29,57 | 53,73 |

## Patentansprüche

1. Verwendung von Alternan als Verdickungsmittel.

2. Verwendung nach Anspruch 1, **dadurch gekennzeichnet, dass** das Alternan als Verdickungsmittel für Nahrungsmittel verwendet wird.

3. Verwendung nach Anspruch 2, **dadurch gekennzeichnet, dass** das Nahrungsmittel ausgewählt ist aus Soßen, Fleischsaft, Suppen, Dressings, Dips, Milchprodukten, wie Joghurt, Trinkjoghurt, Sahne, Vollfettmilch, Magermilch, Buttermilch, Sauermilch, Kefir, Molke, Mousse, Gelee, Pudding, Brotaufstrich, Marmelade, Speiseeis, Backprodukten und Teigen.

4. Verdickungsmittelzusammensetzung umfassend Alternan und mindestens ein weiteres Verdickungsmittel.

5. Verdickungsmittelzusammensetzung nach Anspruch 4, **dadurch gekennzeichnet, dass** das weitere Verdickungsmittel ein Polysaccharid ist.

6. Verdickungsmittelzusammensetzung nach Anspruch 4 oder 5, **dadurch gekennzeichnet, dass** das weitere Verdickungsmittel ausgewählt ist aus der Gruppe bestehend aus Stärke, einem Stärkederivat, modifizierter Stärke, Pektinen, modifizierten Pektinen, Alginsäure, Alginaten, Guarmehl, Tragant, Gummiarabikum, Gelatine, Johannisbrotkernmehl, Galactomanan, Xanthan, Carrageen, Karayagummi, Taragummi, Tamarindengummi, Gellan, Mannan, Maltodextrinen, Cellulose, derivatisierter Cellulose, Dextran und Mischungen von zwei oder mehreren dieser Substanzen.

7. Verdickungsmittelzusammensetzung nach Anspruch 4 oder 5, **dadurch gekennzeichnet, dass** das weitere Verdickungsmittel eine Stärke oder ein Stärkephosphat ist.

8. Verdickungsmittelzusammensetzung nach einem der Ansprüche 4-7, **dadurch gekennzeichnet, dass** das Alternan und das weitere Verdickungsmittel in einem Gewichtsverhältnis von 10 : 1 bis 1:10 vorliegen.

9. Verdickungsmittelzusammensetzung nach einem der Ansprüche 4-8, **dadurch gekennzeichnet dass** sie in Form eines Pulvers vorliegt.

10. Kit umfassend als Komponenten Alternan und mindestens ein weiteres Verdickungsmittel

11. Kit nach Anspruch 10, **dadurch gekennzeichnet, dass** das weitere Verdickungsmittel ausgewählt ist aus der Gruppe bestehend aus Stärke, einem Stärkederivat, modifizierter Stärke, Pektinen, modifizierten Pektinen, Alginsäure, Alginaten, Guarmehl, Tragant, Gummiarabikum, Gelatine, Johannisbrotkernmehl, Galactomanan, Xanthan, Carrageen, Karayagummi, Taragummi, Tamarindengummi, Gellan, Mannan, Maltodextrinen, Cellulose, derivatisierter Cellulose, Dextran und Mischungen von zwei oder mehreren dieser Substanzen.

12. Kit nach Anspruch 10, **dadurch gekennzeichnet, dass** das weitere Verdickungsmittel eine Stärke oder ein Stärkephosphat ist.

13. Kit nach einem der Ansprüche 10 - 12, **dadurch gekennzeichnet, dass** das Alternan und das weitere Verdickungsmittel in einem Gewichtsverhältnis von 10 : 1 bis 1:10 vorliegen.

14. Verwendung einer Verdickungsmittelzusammensetzung nach einem der Ansprüche 4-9 oder eines Kits nach einem der Ansprüche 10-13 zum Verdicken von Nahrungsmitteln, Nahrungsmittelvorprodukten oder Nahrungsmittelzwischenprodukten.

15. Verwendung nach Anspruch 14, wobei das Nahrungsmittel ausgewählt ist aus Soßen, Fleischsaft, Suppen, Dressings, Dips, Milchprodukten, wie Joghurt, Trinkjoghurt, Sahne, Vollfettmilch, Magermilch, Buttermilch, Sauermilch, Kefir, Molke, Mousse, Gelee, Pudding, Brotaufstrich, Marmelade, Speiseeis, Backprodukten und Teigen.

16. Nahrungsmittel, Nahrungsmittelvorprodukt oder Nahrungsmittelzwischenprodukt, **dadurch gekennzeichnet, dass** es eine Verdickungsmittelzusammensetzung nach einem der Ansprüche 4-9 enthält.

17. Nahrungsmittel, Nahrungsmittelvorprodukt oder Nahrungsmittelzwischenprodukt nach Anspruch 16, **dadurch gekennzeichnet, dass** es ausgewählt ist aus Soßen, Fleischsaft, Suppen, Dressings, Dips, Milchprodukten, wie Joghurt, Trinkjoghurt, Sahne, Vollfettmilch, Magermilch, Buttermilch, Sauermilch, Kefir, Molke, Mousse, Gelee, Pudding, Brotaufstrich, Marmelade, Speiseeis, Backprodukten und Teigen.

18. Verfahren zur Erhöhung der Viskosität von Nahrungsmitteln, Nahrungsmittelvorprodukten oder Nahrungsmittelzwischenprodukten, bei dem man dem Nahrungsmittel, Nahrungsmittelvorprodukt oder Nahrungsmittelzwischenprodukt eine Verdickungsmittelzusammensetzung nach einem der Ansprüche 4-9 zusetzt.

19. Verfahren nach Anspruch 18, **dadurch gekennzeichnet, dass** man das Nahrungsmittel, Nahrungsmittelvorprodukt oder Nahrungsmittelzwischenprodukt einer Wärmebehandlung unterzieht.
